# EUROPEAN PATENT APPLICATION

(11) **EP 3 653 800 A1**
(43) Date of publication of application: **20.05.2020**
(21) Application number: 18206465.9
(22) Date of filing: 15.11.2018
(51) Int. Cl.: E03B 3/28

(54) **GENERATION OF DRINKING WATER FROM AIR BY MEANS OF A BOX, COMPRISING AT LEAST ONE SORPTION MATERIAL**

(71) Applicant: BASF SE, 67056 Ludwigshafen am Rhein (DE); The Regents of the University of California, Oakland, CA 94607-5200 (US)
(72) Inventor: Marx, Stefan, 67056 Ludwigshafen (DE); Arnold, Lena, 2040 Antwerpen (BE); Karwacki, Lucasz, 67056 Ludwigshafen (DE); Loeffler, Ralf Dirk, 67056 Ludwigshafen (DE)
(74) Representative: Büchel, Edwin

(57) **Abstract**

The present invention relates to a box (1) for harvesting water from air, comprising at least one sorption material (8), wherein the sorption material (8) comprises at least one metal-organic framework. The invention furthermore relates to a method for water harvesting from air by means of the box (1) according to the invention.

## Description

The present invention relates to a box for harvesting water from air, comprising at least one sorption material, wherein the sorption material comprises at least one metal-organic framework. The invention furthermore relates to a method for water harvesting from air by means of the box according to the invention.

Water shortage is a serious problem in many parts of the earth. One significant water resource may be the water present in the air, for example fog, clouds or dew. Those forms occur, when the temperature is below the dew point and the relative humidity RH is 100 % and accordingly condensation starts. In this case, the condensing water can be collected by conventional techniques, such as meshes, nets or foams.

Relative humidity (RH) is the ratio of the partial pressure of water vapor to the equilibrium vapor pressure of water at a given temperature. Relative humidity depends on the temperature and the pressure of the system of interest. It requires less water vapor to attain high relative humidity at low temperatures; more water vapor is required to attain high relative humidity in warm or hot air.

The relative humidity (RH) of an air-water mixture is defined as the ratio of the partial pressure of water vapor (pH₂O) in the mixture to the equilibrium vapor pressure of water p*(H₂O) over a flat surface of pure water at a given temperature:

Φ = p(H₂O)/p*(H₂O)

Relative humidity (RH) is normally expressed as a percentage; a higher percentage means that the air-water mixture is more humid.

The dew point is the temperature to which air must be cooled to become saturated with water vapor. When further cooled, the water vapor will condense to form liquid water (dew). When air cools to its dew point through contact with a surface that is colder than the air, water will condense on the surface. The measurement of the dew point is related to humidity. A higher dew point means there will be more moisture in the air.

Given that all the other factors influencing humidity remain constant, at ground level the relative humidity rises as the temperature falls. This is because less vapor is needed to saturate the air so, vapor condenses as the temperature falls. Dew point temperature is never greater than the air temperature because relative humidity cannot exceed 100%.

In technical terms, the dew point is the temperature at which the water vapor in a sample of air at constant barometric pressure condenses into liquid water at the same rate at which it evaporates. At temperatures below the dew point, the rate of condensation will be greater than that of evaporation, forming more liquid water.

A high relative humidity implies that the dew point is closer to the current air temperature. A relative humidity of 100% indicates the dew point is equal to the current temperature and that the air is maximally saturated with water. When the moisture content remains constant and temperature increases, relative humidity decreases.

However, when the relative humidity RH is below 100%, collecting condensed water by conventional techniques (such as meshes, nets or foams) is not possible or requires methods, which need the intake of energy. Due to the fact that the relative humidity RH depends on the temperature, condensation of water form air can be achieved by cooling the moist air until a relative humidity RH of 100% is reached. Sufficient cooling of the air typically requires an active cooling system, for example a condenser.

US 9,140,396 B2 relates to an active cooling system for cooling humid air. The described system comprises a cooled core coupled to an external cooling source via a cooling fluid inlet pipe and a cooling fluid outlet pipe. Incoming relatively humid air is led to the cooled core and relatively dry air is leading from the cooled core.

Such active cooling systems typically are efficient in condensing water but require the intake of energy. However, areas, wherein the water supply is problematic and the relative humidity RH is significantly lower than 100%, often do not comprise a reliable power supply. Accordingly, methods for generating drinking water form air in these areas are advantageously low-energy or passive-energy methods.

H. Kim et al. (Science, 356, 430-434, 2017) describe a method and a devise for water harvesting from air wherein no additional input of energy should be required. The described devise is a prototype in laboratory scale and comprises MOF-801 (Zr₆O₄(OH)₄(fumarate)₆] as sorption medium for adsorbing water form air, wherein the MOF is present in the form of a microcrystalline powder coated onto a porous copper foam. The relative humidity while the adsorption is 20%. Desorption is conducted in the closed device and increased temperature to release the captured water from the pores of the MOF. The temperature is increased by simulated sun radiation until the relative humidity in the closed apparatus is 100%, wherein condensation of water starts.

In view of the known methods there is therefore still a need for an effective method for generating drinking water from air in a relatively large scale and in good yield and for a robust and insusceptible device useful for such a method.

It is an object of the present invention to provide a box, which enables the generation of drinking water from air at a relatively low relative humidity.

This object is achieved by a box for harvesting water from air, comprising
a housing (2) and a transparent cover (3), wherein the transparent cover (3) is tilted,
an inlet (4) on a first side (16) of the housing and a first outlet (14) on a second side (17) of the housing (2), wherein the first side (16) and the second side (17) are opposing each other,
an adsorption unit (6), comprising an inclined bottom (7) and at least one sorption material (8) located on the inclined bottom (7), wherein the inclined bottom (7) is located between the first side (16) and the second side (17), wherein the increase of the inclined bottom (7) is from the first side (16) to the second side (17) of the housing (2) and wherein the angle β (23) between an horizontal plane (5) and the inclined bottom (7) is in the range from 0° to 90°, and wherein the at least one sorption material (8) comprises at last one metal-organic framework;
and a water-collecting unit (9) located under the adsorption unit (6).

This object is further achieved by a method for harvesting water from air by means of the box according to the invention.

It has been found that the box and the method for harvesting water from air according to the invention enables the generation of relatively large amounts of drinking water, wherein the generation of the water is driven by solar energy and does not require the intake of any further external energy source. Moreover, it has been found that the box and the method of the invention are particularly suitable for the application in arid regions, wherein the need for an energy-self sufficient generation of drinking water is high.

The box according to the invention typically is composed in a modular manner, which allows an easy change of the size of the box and an easy loading of the sorption material onto the inclined bottom of the adsorption unit. Typically, the units of the box according to the invention are prefabricated, wherein the size of the different components of the box can be modified to adapt it to the climatic parameters at the point of use.

All components of the box according to the invention, particularly the housing, the cover, and the inclined bottom are fabricated from materials, which are appropriate for the use in the food packaging, i.e. which are food-save. Preferably, materials are resistant to temperature of -20°C to 150°C, allowing transmission of light and heat in range of 5 to 95 %.

Suitable materials are for example polyethylene, polypropylene, polyethylene terephthalate, polymethyl(meth)acrylate, or glass. In a preferred embodiment of the invention the housing is fabricated from HDPE (high density polyethylene) and poly methylmethacrylate. Commercial examples may be QUADRO Blocks (for the system enclosure and window glass 5 mm thick, or Evonik PMMA (PLEXIGLAS).

The box according to the invention comprises a housing and a tilted cover, wherein the cover is transparent.

"Transparency" for the purpose of the invention means that the cover allows light to pass through it without being adsorbed. Preferably, the transmission of the light is more than 80 %, within desired VIS - IR spectrum (400 nm - 1000 nm), preferably more than 85 %, more preferably more than 90 %, even more preferably more than 95 % and particularly preferably more than 99 %.

Accordingly, the cover is formed from a material which is appropriated for use in the food packaging and which is transparent and therefore allows sun light to pass through the cover. Examples for suitable materials are glass, polymethyl methacrylate, or polyethylene terephthalate.

"Tilted" for the purpose of the invention means that an angle δ between the transparent cover and a horizontal plane is not 0°. It is possible that the increase of the tilted cover is from the first side to the second side of the housing or from the second side to the first side of the housing; however, in a preferred embodiment the increase of the tilted cover is in flow direction. On other words, in a preferred embodiment the increase of the tilted cover is from the first side to the second side of the housing. The tilted arrangement of the transparent cover allows the droplets of water condensed on the inner side of the cover to run off the cover to its lower end and to drop to the water-collecting unit.

In a typical embodiment, the angel δ is in the range from 2.5° to 87.5°, preferably from 5° to 85° and particularly preferably from 7.5° to 35°.

The box according to the invention comprises an inlet on a first side of the housing and a first outlet on a second side of the housing, wherein the first side and the second side are opposing each other. In a typical embodiment the moist air is flowing from the inlet to the first outlet. In other words the flow direction of the air is from the inlet to the first outlet, i.e. from the first side to the second side of the housing. In a preferred embodiment the opening of the inlet comprises removing the first side and opening the first outlet comprises removing the second side of the housing.

The inlet of the box can be run without any additional flow-rate increasing device. However, in a preferred embodiment the inlet of the invention is equipped with a device to increase the flow-rate, wherein the device can be a passive flowrate-increasing devise or an active flowrate-increasing devise. A passive flow-rate increasing devise according to the invention relates to a devise which increases the flow-rate by means which do not consume energy, whereas active flow-rate increasing devises relate to means which need the intake of energy, e.g. a fan or a blower.

In a preferred embodiment the inlet is equipped with a passive flow-rate increasing device, preferably with a confusor.

A confusor for the purpose of the invention is a device, which is designed to control the direction of the air-flow through the box from the inlet to the first outlet and - in particular - to increase the velocity of the air-flow. In other words the confusor increases the velocity the moist air enters and exits the box according to the invention. The confusor of the invention can be described as being convergent, that is it is narrowing down from a wide diameter to a smaller diameter in the flow direction.

The particular size, diameter and shape of the confusor is selected such that a sufficient flowrate of the moist air is achieved for both adsorption and cooling of the adsorption bed and depends on the ambient conditions, such as wind speed, humidity level, and temperature.

The box of the invention further comprises an adsorption unit and a water-collecting unit located under the adsorption unit.

The adsorption unit comprises an inclined bottom and at least one sorption material located on the inclined bottom. The inclined bottom is located between the first side and the second side of the housing, wherein the increase of the inclined bottom is from the first side to the second side of the housing, wherein the angle β between an horizontal plane (5) and the inclined bottom (7) is in the range from 2.5 to 87.5°, and wherein the at least one sorption material comprises at least one metal-organic framework.

In a typical and preferred embodiment the increase of the inclined bottom is in flow-direction. The adsorption unit therefore is construed such that the incoming air is flowing from the inlet to the first outlet in flow direction, wherein the air stream is brought into contact with the at least one sorption material, comprising at least one metal-organic framework, and preferably flows at least partly through the sorption material. Thereby, the moisture comprised in the air is adsorbed at least partly in the sorption material. The water thereby is adsorbed in the pores and on the surface of the at least one sorption material, comprising at least one metal-organic framework.

Preferred materials for the fabrication of the inclined bottom are for example glass, polymethyl methacrylate, polyethylene terephthalate, or the like. In a preferred embodiment of the invention the inclined bottom is fabricated from polymethyl methacrylate.

A suitable sorption material for the inventive box comprises at least one metal-organic framework material, wherein the metal-organic framework material preferably have a high water uptake capacity of at least 20% by weight, and a high water stability. Useful preferred metal-organic framework materials do not have changes in their adsorption/desorption profile with repeating cycles. Additionally, the sorption of water in the pores of the metal-organic framework material must occur at low relative humidity and display a relatively steep uptake behavior.

Metal-organic frameworks (MOF) are known in the prior art and are described for example in US 5,648,508, EP-A 0 700 253, M. O'Keeffe et al., J. Sol. State Chem., 152 (2000), pages 3 to 20, H. Li et al., Nature 402, 1(1999), page 276, M. Eddaoudi et al., Topics in Catalysis 9, (1999), pages 105 to 111, B. Chen et al., Science 291, (2001), pages 1021 to 1023, DE-A 101 11 230, DE-A 10 2005 053430, WO-A 2007/054581, WO-A 2005/049892 and WO-A 2007/023134. Apart from the conventional method of preparing the MOFs, as described, for example, in US 5,648,508, these can also be prepared by an electrochemical route. In this regard, reference may be made to DE-A 103 55 087 and WO-A 2005/049892. The metal organic frameworks prepared in this way have particularly good properties in respect of the sorption and desorption of chemical substances.

In a preferred embodiment, the at least one metal-organic framework material is selected from the group consisting of Al-fumarate (Basolite A520), Al-furane dicarboxylate (MIL-160), Zr-fumarate (MOF-801) and MOF 841 (Zr-MTB, Zr-(4,4',4",4"'-methanetetrayltetrabenzoate), MOF-303 (Al-pyrazole dicarboxylate).

In a particularly preferred embodiment of the invention the at least one metal-organic framework is Al-Fumarate. Basolite A520 is based on aluminum fumarate. The specific surface area of a Basolite A520, measured by porosimetry or nitrogen adsorption, is typically in the range of from 800 m²/g to 2000 m²/g. Further information on this type of MOF may be found in "Metal-Organic Frame-works, Wiley-VCH Verlag, David Farrusseng, 2011".

MOF-801 is composed of 12-connected Zr-based clusters Zr₆O₄(OH)₄(-COO)₁₂ joined by fumarate linkers into a three-dimensional, extended porous framework of fcu topology.

MIL-160 is built from the assembly of corner sharing aluminum chains octahedra AlO₄(OH)₂ with the 2,5-furandicarboxylic linker.

MOF841 - Is build by a combination of eight connected Zr₆O₄(OH)₄(-COO) SBUs with 4,4',4",4"'-Methanetetrayltetrabenzoic acids (H₄MTB) acting as a linker.

MOF 303 - has a structure of AI(OH)(HPDC), where HPDC stands for 1H-pyrazole-3,5-dicarboxylate.

It is of course possible to use a mixture of two or more different metal-organic frameworks, however, in a preferred embodiment, the box comprises only one metal-organic framework with optimum application properties for the ambient conditions, i.e. for the ambient temperature,relative humidity RH, cost of manufacturing.

In a preferred embodiment of the invention the at least one sorption material is provided in the form of shaped bodies.

WO-A-03/102000 describes in general terms the conversion of metal-organic framework powder into shaped bodies like pellets with a resistance to pressure in the range from 2 to 100 N.

To form shaped bodies several routes exist, among them molding the pulverulent material alone or in combination with a binder and/or other components into a shaped body, for example by pelletizing. In the context of the present invention, the term "molding" refers to any process known to the expert in the field by which a porous material, i.e. any powder, powdery substance, array of crystallites etc., can be formed into a shaped body that is stable under the conditions of its intended use.

While the step of molding into a shaped body is mandatory, the following steps are optional. The molding may be preceded by a step of mixing. The molding may be preceded by a step of preparing a paste-like mass or a fluid containing the porous material, for example by adding solvents, binders or other additional substances. The molding may be followed by a step of finishing, in particular a step of drying.

The step of molding, shaping or forming may be achieved by any method known to a person skilled in the art to achieve agglomeration of a powder, a suspension or a paste-like mass. Such methods are described, for example, in Ullmann's Enzyklopädie der Technischen Chemie, 4th Edition, Vol. 2, p. 313 et seq., 1972, whose respective content is incorporated into the present application by reference.

In general, the following main pathways can be discerned: briquetting or tableting, i.e. mechanical pressing of the powdery material, with or without binders and/or other additives, granulating (pelletizing), i.e. compacting of moistened powdery materials by subjecting it to rotating movements, and sintering, i.e. subjecting the material to be compacted to a thermal treatment. The latter is limited for the material according to the invention due to the limited temperature stability of the organic materials.

Specifically, the molding step according to the invention is preferably performed by using at least one method selected from the following group: briquetting by piston presses, briquetting by roller pressing, binderless briquetting, briquetting with binders, pelletizing, compounding, melting, extruding, co-extruding, spinning, deposition, foaming, spray drying, coating, granulating, in particular spray granulating or granulating according to any process known within the processing of plastics or any combination of at least two of the aforementioned methods. Extruding is in particular preferred.

A mixture comprising the porous material can be prepared in a mixer such as intensive mixers, rotary plates, marumerizers, and any other equipment known by a person skilled in the art. Preferred mixers are selected from the group consisting of intensive mixers, rotary plates, ball formers and marumerizers.

The molding can be carried out at elevated temperatures, for example in the range from room temperature to 300°C, and/or at superatmospheric pressure, for example in the range from atmospheric pressure to a few hundred bar, and/or in a protective gas atmosphere, for example in the presence of at least one noble gas, nitrogen, dry air with a relative humidity of preferably less than 45% or a mixture of two or more thereof. The shaped bodies can be formed for example in an excenter press. A compacting force is preferably between 1 kN and 3000 kN, more preferably between 1 kN and 300 kN and most preferably between 10 kN and 150 kN. For higher forces the permeability of the shaped bodies is unnecessarily reduced and for smaller forces no stable shaped bodies are obtained. The smaller the shaped body, the higher the applied force can be chosen.

Preferably, the shaped body is produced with a pressing pressure in a range from 100 bar to 1000 bar, more preferably from 400 bar to 600 bar. The applied press can comprise an upper punch for compaction or it can compact from both sides with an upper punch and a lower punch. Further, the pressing can be performed under vacuum in order to avoid damaging the porous solid.

The step of molding can be performed in the presence of binders, lubricants and/or other additional substances that stabilize the materials to be agglomerated. As to at least one optional binder, any material known to an expert to promote adhesion between the particles to be molded together can be employed. A binder, an organic viscosity-enhancing compound and/or a liquid for converting the material into a paste can be added to the pulverulent material, with the mixture being subsequently compacted.

Suitably binders, lubricants or additives are, for example, aluminum oxide or binders comprising aluminum oxide, as described, for example, in WO 94/29408, silicon dioxide, as described, for example, in EP 0 592 050 A1, mixtures of silicon dioxide and aluminum oxide, as described, for example, in WO 94/13584, clay minerals as described, for example, in JP 03-037156 A, for example montmorillonite, kaolin, bentonite, hallosite, dickite, nacrite and anauxite, alkoxysilanes as described, for example, in EP 0 102 544 B1, for example tetraalkoxysilanes such as tetramethoxysilane, tetraethoxysilane, tetrapropoxysilane, tetrabutoxysilane, or, for example, trialkoxysilanes such as trimethoxysilane, triethoxysilane, tripropoxysilane, tributoxysilane, alkoxytitanates, for example tetraalkoxytitanates such as tetramethoxytitanate, tetraethoxytitanate, tetrapropoxytitanate, tributoxytitanate, or, for example, trialkoxytitanates, such as trimethoxytitanate, triethoxytitanate, tripropoxytitanate, tributoxytitanate, alkoxyzirconates, for example tetraalkoxyzirconates such as tetramethoxyzirconate, tetraethoxyzirconate, tetrapropoxyzirconate, tetrabutoxyzirconate, or, for example, trialkoxyzirconates such as trimethoxyzirconate, triethoxyzirconate, tripropoxyzirconate, tributoxyzirconate, silica sols, amphiphilic substances, copper, graphite, ascorbyl palmitate, expanded natural graphite (ENG), silicon carbide, polysaccharides, fatty acids, alcyl silicon resins , metal-organic framework materials, where the metal-organic framework has a layer composition, or mixtures thereof.

Suitable binders are for example commercially available under trade names like Pural® SB (aluminum oxide), Ludox® AS 40 (colloidal silica), or Silres® MSE100 (methyl and methoxy groups containing polysiloxane).

Preferred binder, lubricants or additives are graphite, stearic acid, magnesium stearate, copper platelets, silicon carbide, expanded natural graphite (ENG), ascorbyl palmitate, polysaccharides, for example commercially available as Zusoplast PS1, aluminium oxide, for example commercially available as Pural SB or mixtures thereof.

In a preferred embodiment, the shaped body comprises at least 1% by weight of a binder and/or lubricant, which are selected from the group consisting of inorganic oxide, clay, concrete and graphite. Preferably the shaped body comprises less than 10% by weight of a binder and/or lubricant and most preferably, the shaped body comprises between 1.5% and 5% by weight of a binder and/or lubricant and most preferably between 2.5% and 3.5%. Alternatively, no binder or lubricant is used.

Further additives which can be used are, inter alia, amines or amine derivatives such as tetraalkylammonium compounds or amino alcohols and carbonate-comprising compounds, e.g. calcium carbonate. Such further additives are described, for instance, in EP 0 389 041 A1, EP 0 200 260 A1 or WO 95/19222. Further, pore-forming agents such as organic polymers, preferably methylcellulose, polyethylene oxide or mixtures thereof can be added. Preferably, the shaped body comprises from 1% to 50% by weight of further additives and more preferably from 3% to 20% by weight. Alternatively, no further additives are used.

Preferably the metal-organic framework material according to the invention is present in the form of extrudates, particularly preferably in form of extrudates having a diameter of 1 to 5 mm. In a typical embodiment the extrudates have a length of from 2 to 50 mm.

In a preferred embodiment of the invention, the extrudates comprise 0.1% to 10% by weight, preferably 0.5% to 10 % by weight and particularly preferably 1% to 5 % by weight of graphite, based on the total weight of the extrudates

In a preferred embodiment the at least one sorption material is present in the form of at least one sorption package. The at least one sorption package comprises the at least one sorption material surrounded by a packaging material, wherein the packaging material is permeable to air.

The packaging material typically shows a net-like surface framework, wherein the openings are smaller than the diameter of the extrudates to allow moist air flowing through the sorption packages. Thereby, the air can flow through the extrudates and through the voids between the extrudates in the sorption packages. Suitable materials for the packaging material are suitable for the use in the food packaging. Suitable materials are for example nets with a suitable mesh size, e.g. mosquito nets.

The sorption package according to the invention has a longitudinal shape.

Longitudinal for the purpose of the invention means that the sorption package has an extension in three directions, b and c, wherein the extension in one direction a is longer than the extensions in the directions b and c.

The at least one sorption package is arranged on the inclined bottom such that an angle γ between a horizontal plane and the longitudinal axis of the at least one sorption package is in the range from 10 to 80°C.

The angles β and γ are independently from each other in the range from 0° to 90°, preferably from 5° to 85°, more preferably from 10° to 80° and particularly from 15° to 75°.

Obviously, the angles β, γ and δ are formed from the virtual extensions of the inclined bottom respectively longitudinal axis respectively tilted cover of the sorption package and a horizontal plane.

The sorption packages typically have a size of a x b x c, wherein
a is the range from 20 cm to 200 cm, preferably from 50 to 100 cm,
b is the range from 20 cm to 200 cm, preferably from 50 to 100 cm,
c is the range from 2 cm to 20 cm, preferably from 5 to 10 cm,
under the proviso that a is longer than b and c. The sides b and c can be equal or different.

The at least one sorption package according to the invention typically has a weight in the range from 0.1 to 200 kg, preferably 2 to 40 kg, preferably about 10 kg.

In a preferred embodiment the box according to the invention comprises two or more sorption packages, preferably a multitude of sorption packages, particularly preferably 10 to 100 sorption packages, wherein the sorption packages are arranged on the inclined bottom at a smallest distance D from each other. In one embodiment of the inventive box, the inclined bottom comprises distance holders to ensure an optimal and secure positioning of the single sorption packages.

In a typical embodiment the sorption packages are arranged such that the longitudinal axes of the different sorption packages run approximately parallel to each other.

The distance D leads to voids between the sorption packages which lead to a better air circulation. These voids combined with the tilted cover of the box and preferably the confusor creates a so-called chimney-effect. Accordingly, the amount of air flowing through the box according to the invention can be increased and therefore the adsorption of water vapor in the sorption material can be accelerated.

In an alternative embodiment the packages are formed such that the packages themselves exhibit flow channels to further improve air circulation. Both air circulation enhancement methods can also be combined.

The distance D is therefore chosen depending on the above considerations such that reasonable moisture transport into the packages to make best use of the materials' adsorption/desorption capacity.

The use of sorption packages according to the invention allows a fast and simple exchange of single sorption packages, in the case they are contaminated or have lost their performance for a new package without any negative impact to the box itself.

In a second aspect the invention relates to a method for harvesting water from air by means of the box described above, comprising at least one adsorption-desorption-cycle, containing at least one adsorption step AS and at least one desorption step DS,
wherein the at least one adsorption step AS comprises
opening the inlet and the first outlet, wherein air is flowing from the inlet to the first outlet,
wherein the adsorption step AS is carried out at a relative humidity RH_{AS} of 20% to 60 % and at a temperature T_{AS} < 35°C, and wherein water comprised in the air flowing from the inlet to the first outlet is adsorbed in the at least one sorption material, comprising at least one metal-organic framework; and
wherein the at least one desorption step DS comprises
closing the inlet and the first outlet; and
providing thermal energy to desorb water adsorbed in the at least one adsorption step AS in the at least one sorption material, comprising at least one metal-organic framework, such that the relative humidity RH_{DS} in the box is increasing to 100% and water is condensing in the box.
wherein the desorption step DS is carried out at a temperature T_{DS} from 40°C to 150°C, and wherein the thermal energy is provided by solar radiation.

In this context the preferred embodiments mentioned for box according to the invention apply accordingly.

The method according to the invention comprises at least one adsorption-desorption-cycle, wherein the at least one adsorption-desorption-cycle comprises at least one adsorption step AS, followed by at least one desorption step DS. In a preferred embodiment, the at least one adsorption-desorption-cycle consists of one adsorption step AS followed by one desorption step DS.

It is preferred that the at least one adsorption step AS is carried out during the night and the at least one desorption step DS is carried out during the day.

The at least one adsorption step AS comprises opening the inlet and the outlet of the housing, wherein air is flowing through the box in flow-direction, preferably from the inlet to the first outlet. In a preferred embodiment the inlet is equipped with a confusor, wherein the velocity of the air flowing through the box is increased.

In a preferred embodiment of the method the opening of the inlet comprises removing the first side and opening the first outlet comprises removing the second side of the housing.

The at least one adsorption step AS according to the invention is carried out at a relative humidity RH_{AS} of 20 to 60%, i.e. the incoming air which flows through the box has a relative humidity RH_{AS} of 20 to 60%. In other words, the ambient air, surrounding the box of the invention has a relative humidity RH_{AS} of 20 to 60%.

"Adsorption step AS" for the purpose of the present method refers to a step, wherein the at least one sorption material, comprising at least one metal-organic framework, adsorbs water from the air streaming through the inventive box. Thereby water molecules can be adsorbed in the pores and on the surface of the at least one sorption material.

The at least one adsorption cycle AS is concluded either when the sorption material is saturated with water or due to the sunrise, wherein as a consequence the relative humidity of the ambient air decreases.

The term "humidity" relates to the amount of water vapor present in the air. Accordingly, liquid water, e.g. rain drops or fog, or solid water, e.g. snowflakes do not refer to humidity according to the invention.

The term "relative humidity" for the purpose of the invention refers to expressed as a percent, measures the current absolute humidity relative to the maximum (highest point) for that temperature.

As described above the relative humidity (RH) of an air-water mixture is defined as the ratio of the partial pressure of water vapor (pH₂O) in the mixture to the equilibrium vapor pressure of water p*(H₂O)over a flat surface of pure water at a given temperature:

Φ = p(H₂O)/p*(H₂O)

Relative humidity is normally expressed as a percentage; a higher percentage means that the air-water mixture is more humid.

The at least one adsorption step AS according to the invention is carried out at a relative humidity RH_{AS} from 20 to 60%, preferably from 25 to 50 % and particularly preferred from 25 to 35 % and for example at about 30%.

The adsorption step AS is carried out at a temperature T_{AS} < 35°C, preferably less than 30°C, more preferably less than 25°C and particularly preferably less than 22°C. In a typical embodiment of the invention is T_{AS} < T_{DS}.

The at least one sorption material according to the invention, preferably present in the form of extrudates is capable of adsorbing 5 to 40 % by weight, based on the weight of the at least one sorption material, of water vapor at a relative humidity RH_{AS} of 20 to 60 and a temperature T_{AS} < 35°C.

In a particularly preferred embodiment of the inventive method the at least one sorption material comprises 5 to 45 % by weight of water, preferably 10 to 40% by weight, based on the weight of the at least one sorption material after the at least one adsorption step AS.

In a preferred embodiment of the inventive method the adsorption step AS is carried out during the night, wherein the temperature is relatively low and the relative humidity is relatively high, whereas the desorption step is carried out during the day, wherein the relative humidity RH is relatively low and wherein the solar radiation is available.

In a preferred embodiment of the inventive method the relative humidity RH_{AC} is 25 to 100 %, and the temperature T_{AS} is less than 30°C, preferably less than 25°C.

The term "desorption step DS" according to the inventive method refers to a step, wherein the water, which was adsorbed in the at least one sorption material while the adsorption step AS is released from the at least one sorption material.

The inventive method comprises a desorption step DS, wherein desorption substantially is thermal desorption. Accordingly, the energy, which is necessary to release adsorbed water from the at least one sorption material is mainly, preferably complete, provided as thermal energy.

The energy which is required for increasing the temperature of the sorption material to a sufficient temperature T_{DS} is provided by solar radiation, i.e. by the sun, which is shining through the transparent cover of the box on the sorption material, preferably present as at least one sorption package.

As described above the at least one sorption material preferably is present in the adsorption unit in the form of shaped bodies, in particularly in the form of extrudates, preferably having a diameter of 1 -5 mm.

In a particularly preferred embodiment of the invention the at least one sorption material is provided as extrudates comprising 0.1 to 10 % by weight of graphite based on the total weight of the extrudates, wherein the color of the extrudates changes from white or yellow to grey or black. Due to the dark color of the extrudates, the addition of graphite helps to adsorb the sun radiation during the at least one desorption step DS and increases the heat dispersion within the extrudates respectively in the at least one sorption package. Thereby, an improved thermal transport can be achieved than in bright extrudates, which do not comprise any graphite.

The desorption step DS according to the invention does not require any external energy source despite of the sun and therefore is a passive step.

The desorption step DS according to the invention is carried out at a temperature T_{DS} from 40°C to 150°C, preferably from 60°C to 100 °C and particularly preferably from 70°C to 90°C, wherein the temperature T_{DS} relates to the temperature measured inside the box and indicates the temperature of the air in the box.

Typically, the temperature of the inner walls of the housing and of the cover is lower that the temperature T_{DS} to promote the condensation of the water, to avoid its re-evaporation and thereby to prevent the re-adsorption of released water in the at least one sorption material.

The temperature difference between the walls respectively the cover and the sorption material can be increased by the use of a sorption material, wherein the sorption material is provided in the form of shaped bodies comprising graphite, as described above.

The increase of the temperature in the sorption material to a temperature T_{DS} leads to the desorption of water from the at least one sorption material. Thereby, the relative humidity RH_{DS} in the box is increasing to 100%, wherein the desorbed water is condensing in the box.

Condensation according to the invention refers to the change of the physical state of matter of water from the gas phase into the liquid phase. In one embodiment of the invention the evaporated water condenses on the walls of the housing and on the transparent cover of the box, particularly on the inner side of the cover. Due to the tilted arrangement of the cover, the water droplets run down to one side of the cover and can be collected in the water-collecting unit.

In another embodiment of the invention the MOF box comprises a separate condenser unit to increase and steer condensation of the released water more precisely. This condenser unit preferably is connected to a heat recovery unit allowing (partial) recovery of the condensation energy (both phase change enthalpy and cooling effort to reach the dew point) to further increase desorption rate.

The water-collecting unit is constructed such that the collected water can be removed fast and easy and that the re-evaporation of the water collected in the water-collecting unit is minimized. In a preferred embodiment of the invention the desorbed water condensed in the box is collected at least partly in the water-collecting unit.

The collected water can be taken from the water collecting-unit, preferably by means of at least one second outlet. In a preferred embodiment the at least one second outlet is a tap.

The water-collecting unit is in one embodiment located under the adsorption unit. In another embodiment the water-collecting unit is an external tank associated with the MOF-box.

In a preferred embodiment the water-collecting unit is construed such that the bottom of the water-collecting unit is tilted. This construction allows the collection and extraction of relatively small amounts of water.

In a preferred embodiment 0,40 kg water, preferably 0,25 kg per kg sorption material, e.g. Al-Fumarate, preferably can be harvested after one adsorption-desorption cycle.

### Brief description of the drawings

The present invention is described in more detail at hand of accompanying drawings, in which
Figure 1 shows a cross-sectional view of a box according to the invention,
Figure 2 shows a plan view of a box according to the invention.

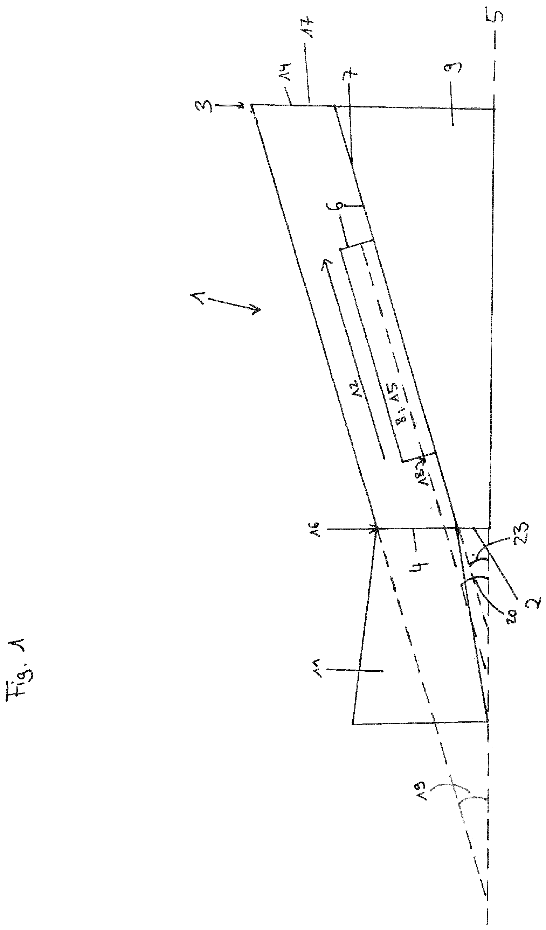

Figure 1 shows a box 1 according to the invention, comprising a housing 2, a tilted, transparent cover 3, an adsorption unit 6 and a water-collecting unit 9 located under the adsorption unit 6. The cover 3 is tilted such that the cover 3 and a horizontal plane 5 form together an angle δ 19. The box 1 comprises an inlet 4 on a first side 16 and a first outlet 14 on a second side 17 of the housing 2. The inlet 4 is connected with a confusor 11. The adsorption unit 6 comprises a sorption material 8, preferably in the form of sorption packages 15, arranged on an inclined bottom 7, wherein the inclined bottom 7 is located between the first side 16 and the second side 17 of the housing 2. The increase of the inclined bottom 7 is from the first side 16 to the second side 17, wherein the inclined bottom 7 and a horizontal plane 5 form together an angle β 23. The sorption package 15 has a longitudinal shape and a longitudinal axis 18, which forms together with a horizontal plane 5 an angle γ 20.

Moist air enters the box 1 via the confusor 11 connected with the inlet 4 and flows in flow direction 12 from the inlet 4 to the first outlet 14, wherein the moist air streams partly through the sorption material 8 respectively the sorption package 15.

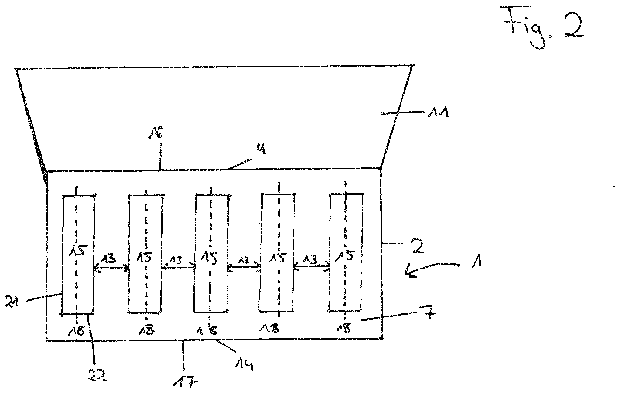

Figure 2 shows a plane view of the box 1 comprising a housing 2, comprising an inlet 4, which is equipped with a confusor 11, and a first outlet 14, wherein the inlet 4 is located on a first side 16 and the first outlet 14 is located on a second side 17 of the housing 2. Several sorption packages 15 are arranged on the inclined bottom 7 in a smallest distance D 13. The sorption packages 15 have an extension in three directions a, b and c, wherein side a 21 is longer than side b 22 and a not-shown side c. The sorption packages 15 are arranged such that the longitudinal axes 18 of the sorption packages 15 are each approximately parallel to each other.

### Reference numerals

- 1: box
- 2: housing
- 3: transparent cover
- 4: inlet
- 5: horizontal plane
- 6: adsorption unit
- 7: inclined bottom
- 8: sorption material
- 9: water-collecting unit
- 10: second outlet
- 11: confusor
- 12: flow direction
- 13: distance D
- 14: first outlet
- 15: sorption package
- 16: first side
- 17: second side
- 18: longitudinal axis
- 19: angle δ
- 20: angle γ
- 21: side a
- 22: side b
- 23: angle β

## Claims

1. Box (1) for harvesting water from air, comprising
a housing (2) and a transparent cover (3), wherein the transparent cover (3) is tilted,
an inlet (4) on a first side (16) of the housing and a first outlet (14) on a second side (17) of the housing (2), wherein the first side (16) and the second side (17) are opposing each other,
an adsorption unit (6), comprising an inclined bottom (7) and at least one sorption material (8) located on the inclined bottom (7), wherein the inclined bottom (7) is located between the first side (16) and the second side (17), wherein the increase of the inclined bottom (7) is from the first side (16) to the second side (17) of the housing (2) and wherein the angle β (23) between an horizontal plane (5) and the inclined bottom (7) is in the range from 0° to 90°, and wherein the at least one sorption material (8) comprises at last one metal-organic framework;
and a water-collecting unit (9) located under the adsorption unit (6).

2. Box according to claim 1, wherein the inlet (4) comprises at least one confusor (11).

3. Box according to claim 1 or 2, wherein the at least one metal-organic framework is selected from the group consisting of Al-fumarate (Basolite A520), Al-furane dicarboxylate (MIL-160), Zr-fumarate (MOF-801) and MOF 841 (Zr-MTB, Zr-(4,4',4",4"'-methanetetrayl-tetrabenzoate), and MOF-303 (Al-pyrazole dicarboxylate).

4. Box according to any one of claims 1 to 3, wherein the metal-organic framework is Al-fumarate.

5. Box according to any one of claims 1 to 4, wherein the at least one sorption material (8) is present in the form of shaped bodies.

6. Box according to claim 5, wherein the extrudates comprise 0.1 to 10 % by weight of graphite, based on the total weight of the extrudates.

7. Box according to any one of claims 1 to 6, wherein the at least one sorption material (8) is present in the form of at least one sorption package (15),
wherein the at least one sorption package (15) comprises the at least one sorption material (8) surrounded by a packaging material, wherein the packaging material is permeable to air,
wherein the at least one sorption package (15) has a longitudinal shape, and wherein the at least one sorption package (15) is arranged on the inclined bottom (7) such that an angle γ (20) between a horizontal plane (5) and the longitudinal axis (18) of the at least one sorption package (15) is in the range from 2.5° to 87.5°.

8. Box (1) according to any one of claims 1 to 7, wherein the angle β (23) and the angle γ (20) are independently from each other in the range from 5° to 85°, preferably from 10° to 80° and more preferably from 15° to 75°.

9. A method for harvesting water from air by means of the box (1) according to any one of claims 1 to 8, comprising at least one adsorption-desorption-cycle, containing at least one adsorption step AS and at least one desorption step DS,
wherein the at least one adsorption step AS comprises
opening the inlet (4) and the first outlet (14), wherein air is flowing from the inlet (4) to the first outlet (14),
wherein the adsorption step AS is carried out at a relative humidity RH_{AS} of 20% to 60 % and at a temperature T_{AS} < 35°C, and wherein water comprised in the air flowing from the inlet (4) to the first outlet (14) is adsorbed in the at least one sorption material (8), comprising at least one metal-organic framework; and
wherein the at least one desorption step DS comprises
closing the inlet (4) and the first outlet (14); and
providing thermal energy to desorb water adsorbed in the at least one adsorption step AS in the at least one sorption material (8), comprising at least one metal-organic framework, such that the relative humidity RH_{DS} in the box (1) is increasing to 100% and water is condensing in the box (1),
wherein the desorption step DS is carried out at a temperature T_{DS} from 40°C to 150°C, and wherein the thermal energy is provided by solar radiation.

10. Method according to claim 9, wherein the desorbed water condensed in the box (1) is collected at least partly in the water-collecting unit (9).

11. Method according to claim 9 or 10, wherein the relative humidity RH_{AC} is 25 to 35 %, and wherein the temperature T_{AS} is less than 30°C, preferably less than 25°C.

12. Method according to any one of claims 9 to 11, wherein T_{DS} is in the range from 60 to 100°C.

13. Method according to any one of claims 9 to 12, wherein the at least one sorption material comprises 5 to 45 % by weight of water, based on the weight of the at least one sorption material, after the at least one adsorption step AS.

14. Method according to any one of claims 9 to 13, wherein at least 0.25 kg water per kg sorption material is obtained after one adsorption-desorption-cycle.
